# EUROPÄISCHE PATENTSCHRIFT

(11) **EP 0 994 795 B1**
(45) Veröffentlichungstag und Bekanntmachung des Hinweises auf die Patenterteilung: **16.03.2005**
(21) Anmeldenummer: 98966773.8
(22) Anmeldetag: 14.12.1998
(51) Int. Cl.: B60S 1/04

(54) **SCHEIBENWISCHERANLAGE**
WINDSCREEN WIPER SYSTEM
SYSTEME D'ESSUIE-GLACE

(30) Priorität: 09.05.1998 DE 19820798
(43) Veröffentlichungstag der Anmeldung: 26.04.2000
(73) Patentinhaber: ROBERT BOSCH GMBH, 70442 Stuttgart (DE)
(72) Erfinder: FISCHER, Ernst, D-76593 Gernsbach (DE); HURST, Richard, D-77656 Offenburg (DE); FLEISCHER, Claus, D-77815 Buehl (DE); BOOS, Tino, D-76532 Baden-Baden (DE)
(86) Internationale Anmeldenummer: PCT/DE1998/003667
(87) Internationale Veröffentlichungsnummer: WO 1999/058379

(56) Entgegenhaltungen:
- EP-A- 0 430 375
- DE-A- 19 539 972
- DE-A- 19 712 113
- GB-A- 2 218 622

## Beschreibung

### Stand der Technik

Die Erfindung geht aus von einer Scheibenwischeranlage nach der DE-A-19712113, diese offenbart eine Scheibenwischeranlage mit einem Wischermotor, der über ein mit diesem verbundenes Getriebegehäuse und über einen Wischerträger mit einem Hohlprofil an einer Fahrzeugkarosserie befestigt ist, wobei das Getriebegehäuse mindestens einen Schraubenstutzen hat, der im Abstand zu einem abtriebsseitigen Lagerdom angeordnet ist und sich in dessen Richtung erstreckt, wobei das Hohlprofil des Wischerträgers sich an den Umfangsflächen des Schraubenstutzens über einen Bereich abstützt, der sich in Längsrichtung des Schraubenstutzes erstreckt, und mittels mindestens einer Haltevorrichtung gehalten ist.

Wischeranlagen für Kraftfahrzeuge werden mit einem Wischerträger, einer sogenannten Platine, an der Karosserie eines Kraftfahrzeugs befestigt. Die Platine trägt einen Wischerantrieb mit einem Wischermotor und einem daran angebauten Getriebe, dessen Abtriebswelle in der Regel über eine Kurbel und Gelenkstangen Kurbeln antreibt, die mit einer Antriebswelle für jeden Scheibenwischer fest verbunden sind. Das Getriebegehäuse ist in der Regel mit drei Schrauben an einem Motorträger der Platine angeschraubt. Die Schrauben greifen in vorstehende Schraubenstutzen eines abtriebsseitigen Gehäusedeckels ein, mit denen sich das Getriebegehäuse am Motorträger abstützt.

Die Antriebswelle des Scheibenwischers ist in einem Wischerlager gelagert, dessen Lagergehäuse an dem Wisoherträger befestigt oder angeformt ist. Dieser ist unmittelbar über die Wischerlager oder über Befestigungsaugen, die am Wischerlager, an dem Wischerträger und/oder dem Motorträger angeformt sind, an einer Fahrzeugkarosserie befestigt.

Aus der DE-GM 74 34 119 ist ein Wischerträger bekannt, der aus einem Vierkantrohr hergestellt ist, an das eine als Motorträger dienende Platte angeschweißt ist. Derartige Wischerträger, oft als Rohrplatinen oder Rohrrahmenanlagen bezeichnet, sind trotz einer leichten Bauweise sehr stabil. Aus Kostengründen wird ein gerades Trägerrohr angestrebt, da kein Vorbiegearbeitsgang erforderlich ist.

Es ist ferner aus der EP 0 409 944 B1 ein Wischerträger bekannt, bei dem ein Motorträger rohrförmige Teile über formschlüssige Anschlüsse verbindet. In die im wesentlichen geraden rohrförmigen Teile sind geräuschdämpfende, frequenzfilternde oder geräuschabsorbierende Zwischenstücke eingesetzt, um Geräusche zu dämpfen, die vom Wischermotor über den Wischerträger auf die Wischerlager und dann auf die Karosserie des Fahrzeugs übertragen werden. Eine Variante zeigt, daß der Motorträger mit einem Gehäusedeckel des Getriebegehäuses einstückig ausgebildet sein kann.

Es ist ferner aus der Zeitschrift "Werkstatt und Betrieb", Carl Hanser Verlag München, 1995, Seiten 812 bis 815, und dem Sonderdruck aus der Zeitschrift "Metallumformtechnik", Claus Dannert Verlag, 1994, unter dem Titel "Präzisions-Werkstücke in Leichtbauweise, hergestellt durch Innenhochdruck-Umformen", ein Verfahren zum Umformen von Rohren zu Werkstükken bekannt. Dieses Verfahren, das vor allem für die Kraftfahrzeugindustrie verwendet wird, arbeitet mit hohen Drücken. Das umzuformende Rohrstück wird in ein geteiltes Formwerkzeug gelegt, in das die gewünschte Werkstückform eingearbeitet ist. Das Formwerkzeug, das in einer Presse montiert ist, wird durch einen vertikal arbeitenden Pressenstößel geschlossen. Die Rohrstückenden werden durch Schließwerkzeuge geschlossen, durch die ein Druckmedium zugeführt wird, das die Rohrwandungen gegen die innere Werkzeugform preßt. Dabei wird von horizontal wirkenden Stößeln ein axialer Druck auf das Rohr aufgebracht, der sich dem Innendruck überlagert. Somit wird der Werkstoff, der für die Umformung erforderlich ist, nicht nur aus der Wanddicke des Rohrstücks entnommen, sondern auch durch die Verkürzung des Rohrs zur Verfügung gestellt. Die Schließwerkzeuge werden während des Umformens axial nachgeführt. Gegenstand einer älteren Patentanmeldung ist es, ein solches Verfahren auch für die Herstellung eines rohrförmigen Wischerträgers mit unterschiedlichen Querschnittformen zu verwenden.

### Vorteile der Erfindung

Nach der Erfindung ist das Hohlprofil des Wischerträgers zwischen mindestens einem Schraubenstutzen einerseits und dem Lagerdom des Getriebegehäuses andererseits hindurch geführt wie im Anspruch 1 bzw. 2 definiert ist. Es stützt sich an den Umfangsflächen der Schraubenstutzen und des Lagerdoms, bzw. der Gegenlager des Getriebegehäuses über einen längeren Bereich ab, der sich in Längsrichtung der Schraubenstutzen erstreckt. Somit ist es gegen Verdrehen gesichert. Dies kann dadurch erreicht werden, daß die Außenkontur des Hohlprofils der Neigung der Schraubenstutzen und des Lagerdoms folgt. Die Neigung der Umfangsflächen der Schraubenstutzen und des Lagerdoms sind vor allem durch die Fertigungsverfahren bedingt, wenn das Getriebegehäuse z. B. durch ein Gießverfahren hergestellt wird.

In axialer Richtung ist das Hohlprofil gegenüber dem Getriebegehäuse ebenfalls formschlüssig gesichert, indem es in dem Bereich der Schraubenstutzen und/oder des Lagerdoms Einbuchtungen aufweist, die die Schraubenstutzen bzw. den Lagerdom teilweise umfassen. Bei sonst kreisförmigen Querschnittprofilen bewirken die Einbuchtungen ferner eine längere Anlage des Hohlprofils entlang der Schraubenstutzen bzw. des Lagerdoms.

Eine andere Möglichkeit, das Hohlprofil gegenüber dem Getriebegehäuse axial zu sichern, besteht darin, daß das Hohlprofil im Bereich der Schraubenstutzen und des Lagerdoms eine durchgehende Querschnittsverengung aufweist, deren Schultern an der Umfangskontur der Schraubenstutzen und/oder an den Kanten der Haltevorrichtung anliegen. Um die formschlüssige Verbindung spielfrei zu gestalten, ist es vorteilhaft, das Hohlprofil zwischen den Schraubenstutzen, dem Lagerdom und der Haltevorrichtung durch eine gewisse Vorspannung einzuklemmen.

Nach einer Ausgestaltung der Erfindung sind die Schraubenstutzen und der Lagerdom durch Gehäuserippen miteinander verbunden. Dabei bilden die Gehäuserippen auf den Seiten des Hohlprofils, die jeweils den Schraubenstutzen bzw. dem Lagerdom abgewandt sind, ein Gegenlager zu den Schraubenstutzen bzw. dem Lagerdom für das Hohlprofil. Dadurch wird den Kerbwirkungen der Einbuchtungen entgegengewirkt und außerdem werden die Kräfte gleichmäßiger und günstiger in das Getriebegehäuse eingeleitet, so daß eine sehr stabile Befestigung des Wischermotors und des Wischergetriebes erreicht wird.

Der Wischerträger der erfindungsgemäßen Scheibenwischeranlage besteht im wesentlichen aus einem formstabilen Hohlprofil mit einem runden oder polygonen Querschnittprofil, das in vorteilhafter Weise in einem Innenhochdruck-Umformverfahren hergestellt wird und dessen Enden die Wischerlager tragen. Ein besonderer Motorträger ist nicht erforderlich. Ferner zeichnet sich der Wischerträger durch ein im Bereich des Wischermotors durchgehendes Hohlprofil aus. Dadurch ergibt sich eine große Festigkeit und Formsteifigkeit sowie ein geringer Fertigungs- und Montageaufwand, da auf Verbindungselemente oder einen Schweißvorgang verzichtet werden kann, um den Motorträger mit dem Wischerträger zu verbinden.

Das Getriebegehäuse der erfindungsgemäßen Scheibenwischeranlage ist nur geringfügig modifiziert, so daß es zum einen mittels der einfachen Haltevorrichtung an dem Hohlprofil des Wischerträgers angebracht werden kann, zum anderen aber auch für eine Befestigung an übliche Wischerträger mit einem konventionellen Motorträger über die Schraubenstutzen geeignet ist.

Bei der erfindungsgemäßen Scheibenwischeranlage kann die Haltevorrichtung zusätzlich zur Abstützung des Wischerträgers dienen, indem sie eine integrierte Stütze, z. B. eine Befestigungsöse, zum Befestigen an der Fahrzeugkarosserie aufweist.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

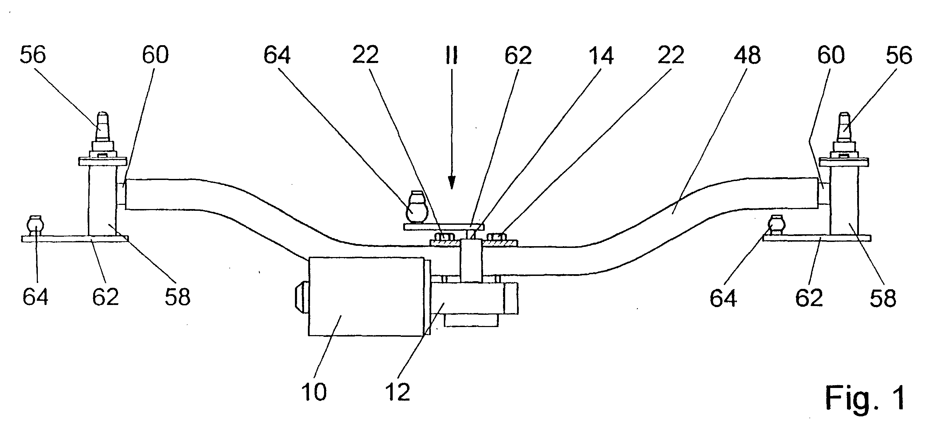

- Fig. 1: einen schematischen Überblick über eine Scheibenwischeranlage ohne Scheibenwischer,
- Fig. 2: eine vergrößerte Draufsicht ohne Haltevorrichtung in Richtung des Pfeils II in Fig. 1,
- Fig. 3: einen Teilschnitt entsprechend der Linie III-III in Fig. 2,
- Fig. 4: einen Teilschnitt entsprechend der Linie IV-IV in Fig. 2,
- Fig. 5: eine Variante zu Fig. 2 mit Haltevorrichtung,
- Fig. 6: eine weitere Variante zu Fig. 2,
- Fig. 7: eine Variante zu Fig. 3 mit einem polygonen Querschnittsprofil und
- Fig. 8: eine Variante zu Fig. 7.

### Beschreibung der Ausführungsbeispiele

Die Scheibenwischeranlage umfaßt einen Wischermotor 10 mit einem angebauten Getriebegehäuse 12, das mittels dreier Schrauben 22 an einem Wischerträger 48, 50, 52 angeschraubt ist. Der Wischermotor 10 treibt über eine Abtriebswelle 14 eine Kurbel 62 mit einer Gelenkkugel 64 an, die über nicht näher dargestellte Gelenkstangen mit entsprechenden Kurbeln 62 und Gelenkkugeln 64 verbunden ist. Diese Kurbeln 62 sind an Antriebswellen 56 befestigt, die in Lagergehäusen 58 gelagert und auf die nicht dargestellte Scheibenwischer montiert sind. Die Lagergehäuse 58 sind mit ihren Anschlußstücken 60 in die Enden des Wischerträgers 48, 50, 52 eingepreßt und dort durch Reibschluß und/oder Formschluß gehalten.

Der Wischerträger 48, 50, 52 hat ein Hohlprofil 86, 88, 90, das zweckmäßigerweise mit einem Innenhochdruckverfahren hergestellt wird. Dadurch lassen sich in einfacher Weise unterschiedliche Querschnittsprofile, z. B. runde und polygone Profile erzielen, die aber auch in Längsrichtung entsprechend den Belastungen und Einbaubedingungen variieren können.

Das Getriebegehäuse 12 wird am Wischerträger 48, 50, 52 gehalten, indem das Hohlprofil 86, 88, 90 des Wischerträgers 48, 50, 52 zwischen einem Lagerdom 28, in dem die Abtriebswelle 14 gelagert ist, und zwei Schraubenstutzen 16 und 18 hindurch geführt ist, die in Achsrichtung des Wischerträgers 48, 50, 52 zu beiden Seiten des Lagerdoms 28 versetzt angeordnet sind. Die Umfangsflächen 30, 32, 34 der Schraubenstutzen 16, 18 bzw. des Lagerdoms 28 besitzen durch das Herstellungsverfahren bedingt eine Schräge 36 mit einem Schrägungswinkel 38. Im Bereich der Schraubenstutzen 16 und 18 sowie des Lagerdoms 28 ist das Hohlprofil 86, 88, 90 der Schrägen 36 angepaßt, so daß es über einen längeren Bereich 24, 26 an den Schraubenstutzen 16, 18 bzw. an dem Lagerdom 28 anliegt und somit gegen Verdrehen gesichert ist.

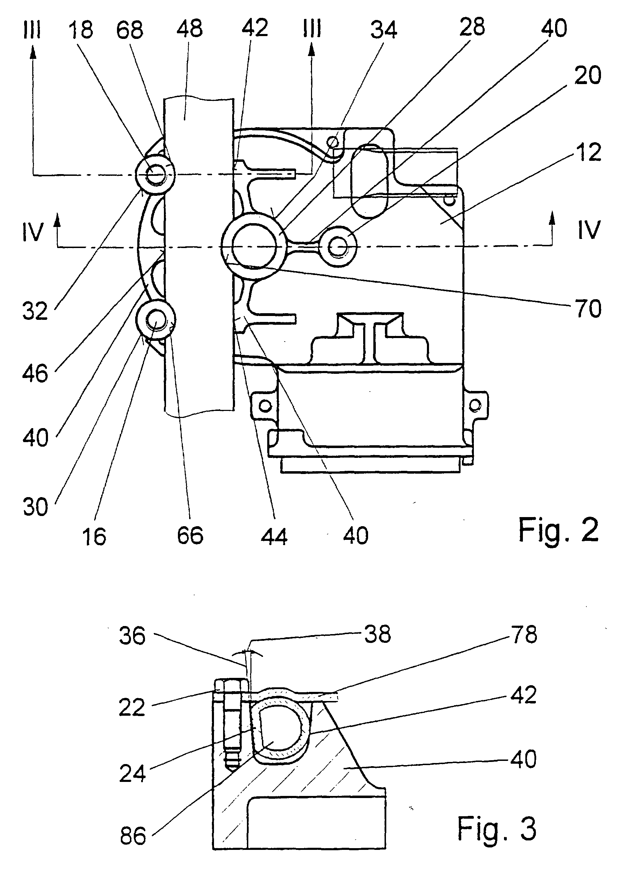

Bei der Ausführung nach Fig. 2, 3, 4 besitzt der Wischerträger 48 Einbuchtungen 66, 68, 70, die sich an den Umfangsflächen 30, 32, 34 der Schraubenstutzen 16 und 18 sowie des Lagerdoms 28 anschmiegen. Dadurch wird der Wischerträger 48 axial zum Getriebegehäuse 12 fixiert.

Der Wischträger 48, 50, 52 wird durch eine Haltevorrichtung 78 in Form einer Abdeckplatte zwischen den Schraubenstutzen 16 und 18 einerseits und dem Lagerdom 28 andererseits gehalten, und durch die Schrauben 22 unter Vorspannung spielfrei eingeklemmt. Um die Haltekräfte gleichmäßig in das Getriebegehäuse 12 einzuleiten und die Kerbwirkung auf den Wischerträger 48, 50, 52 gering zu halten, besitzt das Getriebegehäuse 12 zur Verstärkung Gehäuserippen 40, die im Bereich der Schraubenstutzen 16 und 18 bzw. des Lagerdoms 28 Gegenlager 42, 44, 46 bilden. Diese können allein oder zusammen mit den Schraubenstutzen 16 und 18 bzw. dem Lagerdom 28 zur Verdrehsicherung dienen, indem sie mit einem Bereich in Längsrichtung an dem Wischerträger 48, 50, 52 anliegen. Somit ist eine dauerhafte, spielfreie Verbindung zwischen dem Wischerträger 48, 50, 52 und dem Getriebegehäuse 12 zusammen mit dem Wischermotor 10 durch einfache Mittel ohne einen großen Herstellungsaufwand gewährleistet.

Um den Wischerträger 48, 50, 52 günstig mit der Karosserie eines Fahrzeugs zu verbinden, ist es zweckmäßig, im Bereich des Getriebegehäuses 12 und des Wischermotors 10 eine zusätzliche Stützstelle vorzusehen, z. B. in Form einer als Befestigungsöse ausgebildeten Stütze 84, die in der Haltevorrichtung 78 integriert ist.

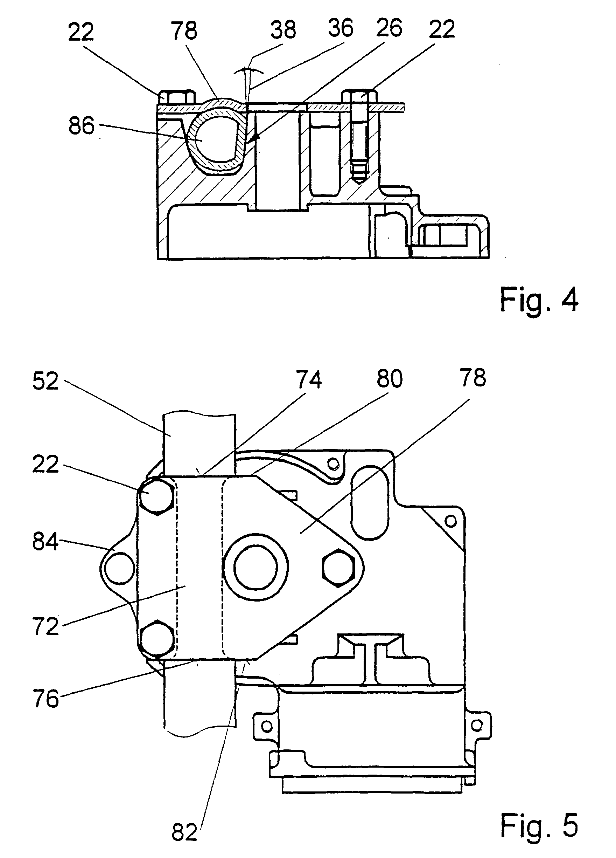

Bei der Ausführung nach Fig. 5 hat der Wischerträger 52 zwischen den Schraubenstutzen 16 und 18 eine durchgehende Querschnittsverengung 72, die den Einbuchtungen 66, 68, 70 entspricht. Die Flanken der Querschnittsverengung 72 liegen verdrehsicher an den Bereichen 24, 26 der Umfangsflächen 30, 32 und 34 an, während Schultern 74 und 76 am Ende der Querschnittsverengung 72 die axiale Sicherung übernehmen, indem sie an den Umfangsflächen 30 und 32 der Schraubenstutzen 16 und 18 und/oder an den Kanten 80 und 82 der Haltevorrichtung 78 anliegen.

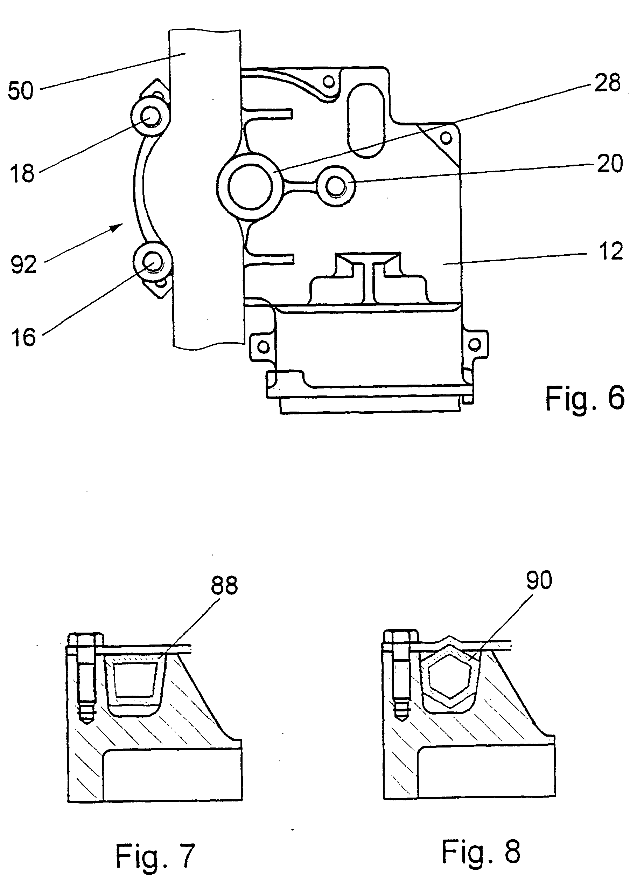

Um den Querschnitt des Wischerträgers 50 in den kritischen Befestigungsbereichen zwischen den Schraubenstutzen 16 und 18 möglichst groß zu halten, ist es vorteilhaft, daß der Wischerträger 50 hier eine Kröpfung 92 aufweist, die gleichzeitig zur axialen Fixierung des Wischerträgers 50 gegenüber dem Getriebegehäuse 12 dient.
Der Wischerträger 48, 50, 52 kann Hohlprofile 86, 88, 90 mit unterschiedlichen Querschnittskonturen aufweisen, z. B. runde, die im wesentlichen kreisförmig oder elliptisch sind, oder polygone, wie sie in Fig. 7 und 8 dargestellt sind. Dadurch kann der Wischerträger 48, 50, 52 den verschiedensten Belastungen und Einbaubedingungen angepaßt werden.

### Bezugszeichen

- 10: Wischermotor
- 12: Getriebegehäuse
- 14: Abtriebswelle
- 16: Schraubenstutzen
- 18: Schraubenstutzen
- 20: Schraubenstutzen
- 22: Schraube
- 24: Bereich
- 26: Bereich
- 28: Lagerdom
- 30: Umfangsfläche
- 32: Umfangsfläche
- 34: Umfangsfläche
- 36: Schräge
- 38: Schrägungswinkel
- 40: Gehäuserippe
- 42: Gegenlager
- 44: Gegenlager
- 46: Gegenlager
- 46: Wischerträger
- 50: Wischerträger
- 52: Wischerträger
- 56: Antriebswelle
- 58: Lagergehäuse
- 60: Anschlußstück
- 62: Kurbel
- 64: Gelenkkugel
- 66: Einbuchtung
- 68: Einbuchtung
- 70: Einbuchtung
- 72: Querschnittsverengung
- 74: Schulter
- 76: Schulter
- 78: Haltevorrichtung
- 80: Kante
- 82: Kante
- 84: Stütze
- 86: Hohlprofil
- 88: Hohlprofil
- 90: Hohlprofil
- 92: Kröpfung

## Patentansprüche

1. Scheibenwischeranlage mit einem Wischermotor (10), der über ein mit diesem verbundenes Getriebegehäuse (12) und über einen Wischerträger (48, 50, 52) mit einem Hohlprofil (86, 88, 90) an einer Fahrzeugkarosserie befestigt ist, wobei das Getriebegehäuse (12) mindestens einen Schraubenstutzen (16, 18) hat, der im Abstand zu einem abtriebsseitigen Lagerdom (28) angeordnet ist und sich in dessen Richtung erstreckt, wobei das Hohlprofil (86, 88, 90) des Wischerträgers (48, 50, 52) zwischen dem Schraubenstutzen (16, 18) einerseits und dem Lagerdom (28) andererseits hindurch geführt ist, sich an den Umfangsflächen (30, 32, 34) des Schraubenstutzens (16, 18) und/oder des Lagerdoms (28) über einen Bereich (24, 26) abstützt, der sich in Längsrichtung des Schraubenstutzes (16, 18) erstreckt, und mittels mindestens einer Haltevorrichtung (78) gehalten ist.

2. Scheibenwischeranlage mit einem Wischermotor (10), der über ein mit diesem verbundenes Getriebegehäuse (12) und über einen Wischerträger (48, 50, 52) mit einem Hohlprofil (86, 88, 90) an einer Fahrzeugkarosserie befestigt ist, wobei das Getriebegehäuse (12) mindestens einen Schraubenstutzen (16, 18) hat, der im Abstand zu einem abtriebsseitigen Lagerdom (28) angeordnet ist und sich in dessen Richtung erstreckt, wobei das Hohlprofil (86, 88, 90) des Wischerträgers (48, 50, 52) zwischen dem Schraubenstutzen (16, 18) einerseits und dem Lagerdom (28) andererseits hindurch geführt ist, sich an den Umfangsflächen (30, 32, 34) des Schraubenstutzens (16, 18) und/oder des Lagerdoms (28), abstützt, und wobei der Schraubenstutzen (16, 18) und der Lagerdom (28) durch Gehäuserippen (40) verbunden sind, die auf der Seite des Hohlprofils (86, 88, 90), die dem Schraubenstutzen (16, 18) bzw. dem Lagerdom (28) abgewandt ist, als Gegenlager (42, 44, 46) zu dem Schraubenstutzen (16, 18) bzw. dem Lagerdom (28) dienen, und daß sich das Hohlprofil (86, 88, 90) an dem Schraubenstutzen (16, 18), dem Lagerdom (28) und/oder mindestens einem der Gegenlager (42, 44, 46) über einen Bereich (24, 26) abstützt, der sich in Längsrichtung des Schraubenstutzens (16, 18) erstreckt, und mittels mindestens einer Haltevorrichtung (78) gehalten ist.

3. Scheibenwischeranlage nach einem der vorhergehenden Ansprüche, **dadurch gekennzeichnet, daß** das Hohlprofil (86, 88, 90) in dem Bereich des Schraubenstutzens (16, 18), des Lagerdoms (28) und/oder mindestens eines der Gegenlager (42, 44, 46) Einbuchtungen (66, 68, 70) aufweist.

4. Scheibenwischeranlage nach einem der vorhergehenden Ansprüche, **dadurch gekennzeichnet, daß** das Hohlprofil (86, 88, 90) zwischen dem Schraubenstutzen (16, 18), dem Lagerdom (28) und /oder mindestens einem der Gegenlager (42, 44, 46) und der Haltevorrichtung (78) eingeklemmt ist.

5. Scheibenwischeranlage nach einem der Ansprüche 1 oder 2, **dadurch gekennzeichnet, daß** das Hohlprofil (86, 88, 90) im Bereich der Schraubenstutzen (16, 18) und des Lagerdoms (28) eine durchgehende Querschnittsverengung (72) aufweist, deren Schultern (74, 76) das Hohlprofil (86, 88, 90) in Längsrichtung gegenüber dem Getriebegehäuse (12) sichern.

6. Scheibenwischeranlage nach einem der vorhergehenden Ansprüche, **dadurch gekennzeichnet, daß** die Haltevorrichtung (78) eine integrierte Stütze (84) zum Befestigen an der Karosserie aufweist.

7. Scheibenwischeranlage (10) nach einem der vorhergehenden Ansprüche, **dadurch gekennzeichnet, daß** das Hohlprofil (86, 88, 90) mit einem Innenhochdrück-Umformverfahren hergestellt ist.

## Claims

1. Windscreen wiper system having a wiper motor (10) which is fastened via a gear-mechanism housing (12), which is connected to it, and via a wiper carrier (48, 50, 52) having a hollow profile (86, 88, 90) to a vehicle body, the gear-mechanism housing (12) having at least one screw neck (16, 18) which is arranged at a distance from an output-side bearing dome (28) and extends in the direction thereof, the hollow profile (86, 88, 90) of the wiper carrier (48, 50, 52) being guided between the screw neck (16, 18), on the one hand, and the bearing dome (28), on the other hand, being supported on the circumferential surfaces (30, 32, 34) of the screw neck (16, 18) and/or the bearing dome (28) via a region (24, 26) which extends in the longitudinal direction of the screw neck (16, 18), and being held by means of at least one holding device (78).

2. Windscreen wiper system having a wiper motor (10) which is fastened via a gear-mechanism housing (12), which is connected to it, and via a wiper carrier (48, 50, 52) having a hollow profile (86, 88, 90) to a vehicle body, the gear-mechanism housing (12) having at least one screw neck (16, 18) which is arranged at a distance from an output-side bearing dome (28) and extends in the direction thereof, the hollow profile (86, 88, 90) of the wiper carrier (48, 50, 52) being guided between the screw neck (16, 18), on the one hand, and the bearing dome (28), on the other hand, being supported on the circumferential surfaces (30, 32, 34) of the screw neck (16, 18) and/or the bearing dome (28), and the screw neck (16, 18) and the bearing dome (28) being connected by housing ribs (40) which serve, on the side of the hollow profile (86, 88, 90) which faces away from the screw neck (16, 18) and the bearing dome (28), as counterbearings (42, 44, 46) to the screw neck (16, 18) and the bearing dome (28), and in that the hollow profile (86, 88, 90) is supported on the screw neck (16, 18), the bearing dome (28) and/or at least one of the counterbearings (42, 44, 46) via a region (24, 26) which extends in the longitudinal direction of the screw neck (16, 18), and is held by means of at least one holding device (78).

3. Windscreen wiper system according to one of the preceding claims, **characterized in that** the hollow profile (86, 88, 90) has depressions (66, 68, 70) in the region of the screw neck (16, 18), of the bearing dome (28) and/or of at least one of the counterbearings (42, 44, 46).

4. Windscreen wiper system according to one of the preceding claims, **characterized in that** the hollow profile (86, 88, 90) is clamped between the screw neck (16, 18), the bearing dome (28) and/or at least one of the counterbearings (42, 44, 46) and the holding device (78).

5. Windscreen wiper system according to either of Claims 1 and 2, **characterized in that** the hollow profile (86, 88, 90) has, in the region of the screw neck (16, 18) and of the bearing dome (28), a continuous cross-sectional narrowing (72), the shoulders (74, 76) of which secure the hollow profile (86, 88, 90) in the longitudinal direction with respect to the gear-mechanism housing (12).

6. Windscreen wiper system according to one of the preceding claims, **characterized in that** the holding device (78) has an integrated support (84) for fastening to the body.

7. Windscreen wiper system (10) according to one of the preceding claims, **characterized in that** the hollow profile (86, 88, 90) is produced by an internal highpressure forming process.

## Revendications

1. Installation d'essuie-glace comportant un moteur d'essuie-glace (10) fixé par l'intermédiaire d'un boîtier de transmission (12) relié au moteur et par un profil creux (86, 88, 90) d'un support d'essuie-glace (48, 50, 52), par à une carrosserie de véhicule,
le boîtier de transmission (12) ayant au moins un manchon à vis (16, 18) distant d'un manchon de palier (28) du côté de la sortie d'entraînement et s'étendant dans cette direction,
le profil creux (86, 88, 90) du support d'essuie-glace (48, 50, 52) étant guidé d'une part entre les manchons à vis (16, 18) et d'autre part le manchon de palier (28), en s'appuyant contre les surfaces périphériques (30, 32, 34) des manchons à vis (16, 18) et/ou du manchon de palier (28) par une zone (24, 26) s'étendant dans la direction longitudinale du manchon de vis (16, 18) et en étant tenu par au moins un dispositif de fixation (78).

2. Installation d'essuie-glace comportant un moteur d'essuie-glace (10) fixé par l'intermédiaire d'un boîtier de transmission (12) relié au moteur et par un profil creux (86, 88, 90) d'un support d'essuie-glace (48, 50, 52), par à une carrosserie de véhicule,
le boîtier de transmission (12) ayant au moins un manchon à vis (16, 18) distant d'un manchon de palier (28) du côté de la sortie d'entraînement et s'étendant dans cette direction,
le profil creux (86, 88, 90) du support d'essuie-glace (48, 50, 52) étant guidé d'une part entre les manchons à vis (16, 18) et d'autre part le manchon de palier (28), en s'appuyant contre les surfaces périphériques (30, 32, 34) des manchons à vis (16, 18) et/ou du manchon de palier (28) et
les manchons à vis (16, 18) et le manchon de palier (28) sont reliés par des nervures de boîtier (40) prévues sur le côté du profilé creux (86, 88, 90) à l'opposé de celui des manchons à vis (16, 18) et du manchon de palier (28), comme contre-appuis (42, 44, 46) aux manchons à vis (16, 18) et au manchon de palier (28) et
le profil creux (86, 88, 90) s'appuie contre les manchons à vis (16, 18), le manchon de palier (28) et/ou au moins l'un des contre-appuis (42, 44, 46) sur une zone (24, 26) s'étendant dans la direction longitudinale du manchon à vis (16, 18) en étant tenu à l'aide d'au moins un dispositif de fixation (78).

3. Installation d'essuie-glace selon l'une des revendications précédentes,
**caractérisée en ce que**
le profil creux (86, 88, 90) présente des cavités (66, 68, 70) au niveau du manchon à vis (16, 18), du manchon de palier (28) et/ou d'au moins l'un des contre-appuis (42, 44, 46).

4. Installation d'essuie-glace selon l'une des revendications précédentes,
**caractérisée en ce que**
le profil creux (86, 88, 90) est serré entre le manchon à vis (16, 18), le manchon de palier (28) et/ou au moins l'un des contre-appuis (42, 44, 46) et le dispositif de fixation (78).

5. Installation d'essuie-glace selon l'une des revendications 1 ou 2,
**caractérisée en ce que**
le profil creux (86, 88, 90) présente une diminution de section continue (72) au niveau des manchons à vis (16, 18) et du manchon de palier (28), les épaulements (74, 76) de ce rétrécissement bloquant le profil creux (86, 88, 90) dans sa direction longitudinale par rapport au boîtier de transmission (12).

6. Installation d'essuie-glace selon l'une des revendications précédentes,
**caractérisée en ce que**
le dispositif de fixation (78) comporte un appui intégré (84) pour être fixé à la carrosserie.

7. Installation d'essuie-glace selon l'une des revendications précédentes,
**caractérisée en ce que**
le profil creux (86, 88, 90) est réalisé par un procédé de déformation avec haute pression intérieure.
